# EUROPÄISCHE PATENTSCHRIFT

(11) **EP 2 217 638 B1**
(45) Veröffentlichungstag und Bekanntmachung des Hinweises auf die Patenterteilung: **03.08.2016**
(21) Anmeldenummer: 08853395.5
(22) Anmeldetag: 20.11.2008
(51) Int. Cl.: C08G 69/16, C08G 69/04, C08G 69/46, C08J 3/12, B01D 11/02, B29B 9/06, B29B 9/16, C08G 69/48

(54) **VERFAHREN UND VORRICHTUNG ZUR HERSTELLUNG VON POLYAMID**
METHOD AND DEVICE FOR PRODUCING POLYAMIDE
PROCÉDÉ ET DISPOSITIF DE FABRICATION DE POLYAMIDE

(30) Priorität: 28.11.2007 DE 102007057189
(43) Veröffentlichungstag der Anmeldung: 18.08.2010
(73) Patentinhaber: Maag Automatik GmbH, 63762 Großostheim (DE)
(72) Erfinder: DEISS, Stefan, 55896 Harxheim (DE)
(74) Vertreter: Spranger, Stephan
(86) Internationale Anmeldenummer: PCT/DE2008/001929
(87) Internationale Veröffentlichungsnummer: WO 2009/067995

(56) Entgegenhaltungen:
- WO-A-02/094908
- DD-A5- 282 618
- DE-A1- 4 402 917
- US-A1- 2005 035 483
- US-B1- 6 194 537
- DATABASE WPI Week 200749 Thomson Scientific, London, GB; AN 2007-496744 XP002519799 -& JP 2007 185950 A (MITSUBISHI CHEM CORP) 26. Juli 2007 (2007-07-26)

## Beschreibung

Die Erfindung betrifft ein Verfahren zur Herstellung von Polyamid 6 oder Copolyamiden gemäß dem Oberbegriff des Anspruches 1 sowie eine Vorrichtung zur Herstellung von Polyamid 6 oder Copolyamiden gemäß dem Oberbegriff des Anspruchs 9.

Polyamide finden heute in einer Vielzahl von Gebieten Anwendung, zum Beispiel für Textilien, Teppiche oder Reifencords, bei der Herstellung von Spritzgussteilen, zum Beispiel im Kraftfahrzeugbereich, oder bei der Herstellung von Folien oder Hohlkörpern für den Verpackungsbereich. Dabei sind besonders die Vielzahl von positiven Eigenschaften von Bedeutung, zum Beispiel die hohe Zähigkeit und hohe Temperaturfestigkeit kombiniert mit guter Elastizität von Polyamiden.

Ein Überblick über verschiedene Verfahren zur Herstellung von Polyamiden, zum Beispiel von Polyamid 6 oder von Copolyamiden auf Basis von Caprolactam, wird im Kuststoff-Handbuch, Band 3 "Technische Thermoplaste", Teilband 4 "Polyamide", herausgegeben von G. W. Becker und D. Braun, Hanser-Verlag München und Wien, 1998, Seiten 22 bis 75 gegeben. Einen Überblick über spinntechnische Anwendungen von Polyamiden findet sich beispielsweise in "Synthetische Fasem", Handbuch für Anlagenplanung, Franz Fourné, Hanser-Verlag München und Wien, 1995, Seiten 36 bis 56.

Generell wird bei heute gängigen Verfahren und Vorrichtungen zur Herstellung von Polyamiden, insbesondere zur Herstellung von Polyamid 6 oder von Copolyamiden, eine Schmelze auf Basis von Caprolactam einer Polymerisation unterzogen. Eine derart hergestellte Polyamid-Schmelze wird dann zunächst beispielsweise mittels Unterwassergranulierung oder zum Beispiel auch mittels Stranggranulierung granuliert. Ein solches granuliertes Polyamid-Material enthält jedoch üblicherweise noch etwa 10% an niedermolekularen Spezies bzw. Bestandteilen, zum Beispiel an Caprolactam und zyklischen Oligomeren. Um eine Störung durch diese niedermolekularen Bestandteile bei der weiteren Handhabung eines solchen granulierten Polyamidmaterials zu vermeiden, werden diese niedermolekularen Bestandteile durch Extraktion auf ein für die jeweilige Anwendung notwendiges Maß reduziert und so ihr Restgehalt eingestellt. Üblicherweise wird dazu das nach der Granulierung getrocknete Granulat einer wässrigen Extraktion unterzogen, wobei das Granulat üblicherweise erhebliche Mengen an Wasser aufnimmt. Somit erfolgt nach einem entsprechenden Extraktionsschritt ein weiterer Trocknungsschritt. Üblicherweise werden im Stand der Technik dabei beispielsweise Inertgas-Trockner eingesetzt, welche einer Gegenstrom-Extraktionsvorrichtung nachgeordnet sind.

Das Wasser am Ausgang der Extraktion hat üblicherweise einen Extraktgehalt, das heißt einen Anteil von niedermolekularen Bestandteilen, von über 10 Gew. %. Dieses Extraktionswasser wird entweder direkt zum Polymerisationsprozess zurückgeführt oder es wird nach der Extraktion wiederaufbereitet, wobei die extrahierten niedermolekularen Bestandteile rückgewonnen werden und dann dem Polymerisationsprozess wieder zugeführt werden können.

Bei dem beschriebenen Granulationsvorgang ist allgemein darauf zu achten, dass eine für den zuverlässigen Ablauf der Granulation geeignete Zusammensetzung des Granulationswassers eingehalten wird, wobei der Extraktgehalt im Granulationswasser üblicher Weise bei etwa 4 Gew. % liegt. Ist dies nicht gegeben, kann die Reinigung des Granulationswassers nicht optimal ablaufen, da es zu einem Aufschäumen des Granulationswassers kommt.

Ein direktes Einleiten von Granulationswasser zur Extraktion würde den dortigen Extraktgehalt unerwünscht absenken. Der geforderte Trocknungsgrad der Polyamid-Granulatkömer (gängig als PA-Chips bezeichnet) am Eingang der Extraktion beträgt etwa 1 Gew. %

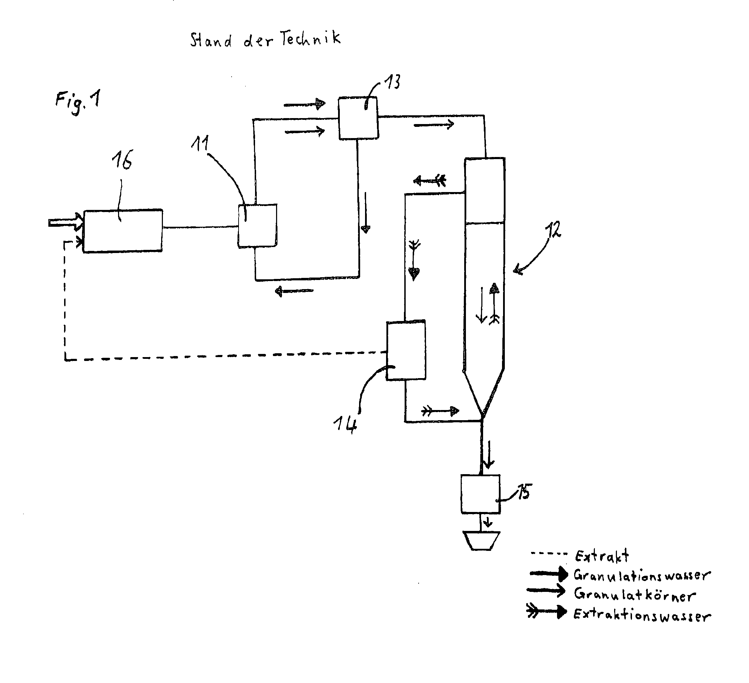

Die Figur 1 zeigt eine schematische Darstellung einer Vorrichtung gemäß dem Stand der Technik. In einem Polymerisationsreaktor 16 wird eine polymerisierte Schmelze von Polyamid 6 oder Copolyamiden auf Basis von Caprolactam (entsprechender Pfeil zum Polymerisationsreaktor 16) erzeugt. In einem Unterwassergranulator 11 wird die polymerisierte Schmelze als Granulatkörner in Granulationswasser granuliert. Anschließend werden die Granulatkörner in einem Trockner 13 vom Granulationswasser getrocknet und dann einer Extraktionsvorrichtung 12 zugeführt, wo in einem separaten Extraktionswasser-Kreislauf mit integrierter Reinigungsvorrichtung 14 zur Rückgewinnung des Extraktes die Extraktion mittels Extraktionswasser abläuft. Das rückgewonnene Extrakt kann wieder dem Polymerisationsreaktor zugeführt werden. Nach der Extraktion erfolgt eine weitere Trocknung der Granulatkörner in einem Trockner 15. Das Granulationswasser wird in einem eigenen Kreislauf aufbereitet und zum Unterwassergranulator 11 zurückgeführt. Die Material- und Wasserströme sind durch die entsprechenden Pfeile in Fig.1 gezeigt.

Die japanische Anmeldung JP 2007-185950 beschreibt ein Verfahren zur Herstellung von Granulatkörnern aus Polyamidharz zur Herstellung einer Polyamidfolie und eine entsprechende Folie. Beim dortigen Verfahren werden Granulatkörnern im Stranggranulierverfahren hergestellt, und anschließend werden die Granulatkörner in verschiedenen Wasserbädern einer Extraktion unterzogen.

Das Dokument DD 282 618 A5 beschreibt ein Verfahren zur Abkühlung von schmelzeflüssigen Polyamidbändern und -drähten, wobei dabei als Kühlmedium ein extrakthaltiges Wasser verwendet wird.

Das Dokument US 6,194,537 B1 beschreibt Gegenstände wie Garne oder Folien aus Nylon 6-Material, welche nach einem Extraktionsschritt getrocknet werden.

Die Schrift WO 02/094908 A1 beschreibt ein Verfahren und eine Vorrichtung zur Extraktion von Polyamid, wobei nach einer Granulierung von Polyamidschmelze zu Granulatkömem eine separate Extraktion der niedermolekularen (Rest-)Bestandteile unter Verwendung speziellen Extraktionswassers unter spezifischen Bedingungen, insbesondere mehrstufig unter erhöhter Temperatur und Druck, erfolgt.

Aus der Druckschrift JP 2007 185950 A ist ein Unterwasserstranggussverfahren bekannt, bei dem Kunststoffstränge aus Polyamid extrudiert werden und in einem Wasserbad verfestigt und anschließend granuliert werden. Die erzeugten Granulate werden anschließend einer Extraktion in mehreren Stufen mit Prozessfluid und anschließend mit frischem Extraktionswasser unterworfen. Aus der Druckschrift US 2005/0035483 A1 ist ein Unterwasserpelletierverfahren unter anderem für Polyamid bekannt, bei dem unmittelbar nach Austritt der Kunststoffschmelze aus einer Lochdüse der Kunststoff pelletiert wird.

Der Erfindung liegt die Aufgabe zugrunde, die Nachteile des Standes der Technik zu überwinden und insbesondere ein Verfahren und eine Vorrichtung zur Herstellung von Granulatkömem von Polyamid 6 oder von Copolyamiden vorzusehen, welche(s) einfach und kostengünstig und dabei dennoch zuverlässig die Herstellung von einfach weiterverarbeitbaren Granulatkömem von Polyamid 6 oder von Copolyamiden ermöglicht.

Diese Aufgabe wird erfindungsgemäß mit einem Verfahren mit den Merkmalen gemäß Anspruch 1 beziehungsweise durch eine Vorrichtung mit den Merkmalen gemäß Anspruch 9 gelöst.

Vorteilhafte Ausführungsformen der Erfindung sind in den jeweiligen Unteransprüchen definiert.

Das erfindungsgemäße Verfahren zur Herstellung von Granulatkörnern von Polyamid 6 oder von Copolyamiden weist die Schritte auf:
- Erzeugen einer Schmelze von Polyamid 6 oder Copolyamiden mittels Polymerisation. Die Polymerisation findet dabei auf Basis von Caprolactam statt. - Erzeugen von Granulatkörnern aus der Schmelze mittels Unterwassergranulation, zum Beispiel mittels eines Unterwassergranulators, wie er von der Anmelderin unter der Produktbezeichnung SPHERO hergestellt und angeboten wird, wobei die Granulatkörner in ein Prozessfluid granuliert werden.
- Wegführen der Granulatkörner vom Ort der Unterwassergranulation in dem Prozessfluid, und
- Zuführen der Granulatkörner in dem Prozessfluid zu einer Extraktion.
- Extraktion von niedermolekularen Bestandteilen, insbesondere von Bestandteilen, welche nicht vollständig polymerisiert wurden, als Extrakt, wobei bevorzugt eine fluidbasierte beziehungsweise wasserbasierte Extraktion vorgenommen wird.
- Trocknen der Granulatkörner nach der Extraktion.

Das erfindungsgemäße Verfahren ist weiter dadurch gekennzeichnet, dass die Unterwassergranulation und die Extraktion unter Verwendung desselben Prozessfluids erfolgen. Es wird also sowohl die Unterwassergranulation als auch die Extraktion unter Verwendung eines Prozessfluids erfindungsgemäß vorgenommen, wobei dieses Prozessfluid für beide Verfahrensschritte dasselbe ist, das heißt, dass das Fluid, welches in der Unterwassergranulation zum Einsatz kommt, dasselbe Fluid ist, welches bei der Extraktion zum Einsatz kommt. Kurz gesagt ist also das Förderfluid der Unterwassergranulation dasselbe beziehungsweise identisch mit dem Extraktionsfluid bei der Extraktion. Es wird erfindungsgemäß also ein einheitliches Prozessfluid sowohl zur Granulierung als auch für den Transport der Granulatkörner und auch für die Extraktion von niedermolekularen Bestandteilen von den Granulatkömem eingesetzt.

Durch das erfindungsgemäße Verfahren ist es zum einen möglich, den zwischengeschalteten Trocknungsschritt, welcher gemäß dem Stand der Technik üblicherweise vorgesehen ist und welcher dabei zwischen der Granulation und Extraktion vorgesehen ist, zu vermeiden. Außerdem kann die Schmelzeenergie der in das erfindungsgemäße Prozesswasser granulierten Granulatkörner zur erforderlichen Aufheizung des Prozessfluids mitverwendet werden, wodurch Energieeinsparungen möglich sind. Ferner kann somit auf einfache und kostengünstige Weise durch Vermeidung des Bereitstellenmüssens von zwei verschiedenen Fluiden ein besonders einfaches und kostengünstiges und dabei dennoch zuverlässiges Verfahren zur Herstellung von Granulatkömem von Polyamid 6 oder von Copolyamiden erfindungsgemäß bereitgestellt werden, wobei ein einfach und zuverlässig weiterverarbeitbares Granulat erfindungsgemäß zur Verfügung gestellt werden kann.

Bei dem erfindungsgemäßen Verfahren kann das Prozessfluid bevorzugt eine Zusammensetzung aufweisen, welche einer Zusammensetzung nach der Extraktion entspricht, bevorzugt einer normalerweise üblichen Zusammensetzung nach der Extraktion entspricht, wobei das Prozessfluid bevorzugter mehr als 10 Gew. % Extrakt, das heißt niedermolekulare Bestandteile, aufweist. Somit kann das gemäß dem erfindungsgemäßen Verfahren verwendete Prozessfluid die Zusammensetzung eines Extraktionsfluids haben, was die Zuverlässigkeit des Verfahrens bezüglich der Herstellung von einfach und besonders leicht weiterzuverarbeitendem Granulat weiter verbessern kann.

Das Prozessfluid wird in einem ersten Kreislauf zwischen Unterwassergranulation und Extraktion geführt und in einem zweiten Kreislauf zwischen Extraktion und einer Reinigung des Prozessfluids vom Extrakt geführt, wobei zwischen dem ersten Kreislauf und dem zweiten Kreislauf eine Fluidverbindung für das Prozessfluid besteht, sodass sich der erste Kreislauf und der zweite Kreislauf zumindest dort, das heißt, dort wo diese Fluidverbindung besteht, abschnittsweise überlappen. Somit kann auf technisch einfache und somit kostengünstige Art und Weise ein geschlossener Kreislauf beziehungsweise zwei geschlossene Kreisläufe, welche miteinander in Verbindung stehen, insbesondere direkt in Verbindung stehen, erfindungsgemäß bevorzugt verwirklicht werden.

Bei dem erfindungsgemäßen Verfahren kann zur weiteren Verbesserung der Zuverlässigkeit des Granulierens, der Weg- und Zuführung des Granulats in dem Prozessfluid und der Rückführung des Prozessfluids zur Granulation in dem ersten Kreislauf, bevorzugt in einer Fluidrückführverbindung, eine vom zweiten Kreislauf, bevorzugt in einer Extraktions-Fluidverbindung, unabhängige Temperatur des Prozessfluids eingestellt werden.

Um einen besonders zuverlässigen Granulationsschritt zu ermöglichen, kann bei dem erfindungsgemäßen Verfahren bevorzugt das Prozessfluid bei der Unterwassergranulation und dem Weg- und Zuführen der Granulatkörner unter einem erhöhten Druck über Umgebungsdruck stehen, wobei der Druck bevorzugt gleich oder größer 1 bar ist, bevorzugter gleich oder größer 3 bar ist, noch bevorzugter gleich oder größer 4 bar ist. Somit kann auch ein eventuelles Aufschäumen des Prozessfluids zuverlässig vermieden oder zumindest reduziert werden.

Bei einem solchen erfindungsgemäßen Verfahren kann die Extraktion bei gegenüber dem erhöhten Druck niedrigerem Druck, bevorzugt bei Umgebungsdruck, erfolgen und vor der Extraktion kann ein Abbau des Drucks des Prozessfluids von dem erhöhten Druck auf den niedrigeren Druck, bevorzugt den Umgebungsdruck, erfolgen. Der Extraktionsschritt findet dabei also bei gegenüber dem Granulationsschritt verringertem Druck statt.

Bei dem erfindungsgemäßen Verfahren kann aber auch die Extraktion bei dem erhöhten Druck erfolgen und nach der Extraktion und vor dem Trocknen ein Abbau des Drucks von dem erhöhten Druck auf niedrigeren Druck, bevorzugt Umgebungsdruck, erfolgen. Somit können beispielsweise der Granulationsschritt und der Extraktionsschritt bei erhöhtem Druck, bevorzugt bei dem gleichen erhöhten Druck, erfindungsgemäß bevorzugt durchgeführt werden. Dies kann die Effizienz des Extraktionsschritts gegebenenfalls weiter steigern, das heißt, die Wirksamkeit der Extraktion von niedermolekularen Bestandteilen kann so verbessert werden.

Um einen reibungslosen Verfahrensablauf unter möglichst allen Verfahrensbedingungen und insbesondere bei großem Massedurchsatz erfindungsgemäß weiter verbessern zu können, kann ein Durchsatz von Prozessfluid bei der Unterwassergranulation und dem Weg- und Zuführen der Granulatkörner in dem Prozessfluid und ein Durchsatz von Prozessfluid bei der Extraktion auf ein Durchsatz-Verhältnis von mindestens 3:1 eingestellt werden.

Die erfindungsgemäße Vorrichtung zur Herstellung von Granulatkörnem von Polyamid 6 oder von Copolyamiden kann zur Durchführung des erfindungsgemäßen Verfahrens verwendet werden. Die erfindungsgemäße Vorrichtung weist auf einen Unterwassergranulator, welcher aus einer in einem Polymerisationsreaktor polymerisierten Schmelze von Polyamid 6 oder Copolyamiden Granulatkörner in ein Prozessfluid granuliert, wobei zwischen dem Unterwassergranulator und einer Extraktionsvorrichtung eine Fluidwegführverbindung besteht, worüber das Prozessfluid mit den darin enthaltenen Granulatkömem vom Unterwassergranulator weggeführt ist und der Extraktionsvorrichtung zugeführt ist. Nach der Extraktionsvorrichtung ist ein Trockner zum Trocknen der Granulatkörner vorgesehen. Vor der Extraktionsvorrichtung ist kein solcher Trockner erfindungsgemäß erforderlich und wird somit erfindungsgemäß weggelassen, zumal erfindungsgemäß eine direkte Fluidverbindung zwischen Unterwassergranulator und Extraktionsvorrichtung vorgesehen ist. Bei der erfindungsgemäßen Vorrichtung sind der Unterwassergranulator und die Extraktionsvorrichtung mit demselben Prozessfluid betrieben und zwischen der Extraktionsvorrichtung und dem Unterwassergranulator besteht neben der Fluidwegführverbindung für Prozessfluid und darin enthaltenen Granulatkömem von dem Unterwassergranulator zu der Extraktionsvorrichtung auch eine Fluidrückführverbindung für das Prozessfluid ohne Granulatkörner von der Extraktionsvorrichtung zurück zu dem Unterwassergranulator.

Auf diese Weise wird eine erfindungsgemäße Verbindung von Unterwassergranulator beziehungsweise Unterwassergranulation und Extraktionsvorrichtung beziehungsweise Extrahierung von niedermolekularen Bestandteilen durch ein und dasselbe Prozessfluid erfindungsgemäß ermöglicht und es wird auch eine Rückführung des Prozessfluids von der Extraktionsvorrichtung zum Unterwassergranulator erfindungsgemäß ermöglicht. Auf diese Art kann erfindungsgemäß eine Vorrichtung bereitgestellt werden, welche auf besonders einfache und somit kostengünstige Art und Weise eine dabei dennoch zuverlässige Herstellung von Granulatkörnern von Polyamid 6 oder von Copolyamiden erlaubt.

Um auf besonders einfache Weise eine Einstellbarkeit der Zusammensetzung des Prozessfluids zu erlauben, kann bei der erfindungsgemäßen Vorrichtung eine Reinigungsvorrichtung für das Prozessfluid vorgesehen sein, bevorzugt im Bereich einer Extraktions-Fluidverbindung der Extraktionsvorrichtung.

Bei der erfindungsgemäßen Vorrichtung kann bevorzugt das Prozessfluid in einem ersten Kreislauf zwischen dem Unterwassergranulator und der Extraktionsvorrichtung durch den Unterwassergranulator, die Fluidwegführverbindung zumindest einen Abschnitt der Extraktionsvorrichtung, eine gemeinsame Fluidverbindung und die Fluidrückführverbindung geführt sein, und in einem zweiten Kreislauf zwischen der Extraktionsvorrichtung und einer Reinigungsvorrichtung durch die gemeinsame Fluidverbindung, die Extraktions-Fluidverbindung, die Reinigungsvorrichtung und zumindest einen Abschnitt der Extraktionsvorrichtung geführt sein, wobei zwischen dem ersten Kreislauf und dem zweiten Kreislauf die gemeinsame Fluidverbindung besteht, sodass sich der erste Kreislauf und der zweite Kreislauf zumindest dort abschnittsweise überlappen. Somit kann ein geschlossenes System des Kreislaufs des Prozessfluids erfindungsgemäß bevorzugt vorgesehen sein, wobei das Prozessfluid sowohl für die Granulierung als auch die Extraktion verwendet ist und entsprechend umlaufen kann, wobei sich in der gesamten erfindungsgemäßen Vorrichtung beziehungsweise dem gesamten erfindungsgemäßen System von Unterwassergranulator und Extraktionsvorrichtung ein und dasselbe Prozessfluid befindet.

Bei der erfindungsgemäßen Vorrichtung kann zur weiteren Verbesserung der Zuverlässigkeit des Granulierens, der Weg- und Zuführung des Granulats in dem Prozessfluid und der Rückführung des Prozessfluids zur Granulation in dem ersten Kreislauf, bevorzugt im Bereich der Fluidrückführverbindung, eine vom zweiten Kreislauf unabhängige Temperatur des Prozessfluids einstellbar sein. Dazu können in den jeweiligen Bereichen/Abschnitten Temperaturmess- und - regelvorrichtungen vorgesehen sein.

Bei der erfindungsgemäßen Vorrichtung kann das Prozessfluid zumindest im Bereich des Unterwassergranulators unter gegenüber Umgebungsdruck erhöhtem Druck stehen und zumindest in der Extraktionsvorrichtung unter gegenüber dem erhöhten Druck niedrigerem Druck, bevorzugt Umgebungsdruck, stehen und zwischen dem Unterwassergranulator und der Extraktionsvorrichtung zumindest eine Druckabbauvorrichtung, bevorzugt in der Fluidwegführverbindung, angeordnet sein. Somit ist eine besonders einfache Einstellung verschiedener Druckniveaus in der erfindungsgemäßen Vorrichtung möglich.

Bei der erfindungsgemäßen Vorrichtung kann das Prozessfluid auch im Bereich des Unterwassergranulators und in der Extraktionsvorrichtung unter gegenüber Umgebungsdruck erhöhtem Druck stehen und zwischen der Extraktionsvorrichtung und dem danach angeordneten Trockner kann eine Druckabbauvorrichtung angeordnet sein, das heißt die Extraktionsvorrichtung kann eine Druckextraktionsvorrichtung sein. Somit kann es erfindungsgemäß bevorzugt möglich sein, dass die Extraktion in der Extraktionsvorrichtung unter erhöhtem Druck erfolgen kann, was die Effizienz des Extraktionsschritts durch dann mögliche höhere Temperaturen weiter verbessern kann.

Die erfindungsgemäße Vorrichtung kann in der Fluidwegführverbindung eine Schleuse zum Ausschleusen von Granulatkömem/Agglomeraten aufweisen. Dadurch kann insbesondere bei einem Anfahrvorgang der Vorrichtung die einfache Entnahme von Anfahrmaterial durchführbar sein.

Es sei angemerkt, dass alle Merkmale und Vorteile der Erfindung, welche oben im Zusammenhang mit dem erfindungsgemäßen Verfahren beschrieben wurden, auch entsprechend für die erfindungsgemäße Vorrichtung gelten und umgekehrt.

Die Erfindung wird anhand der beigefügten beispielhaften schematischen Zeichnungen näher erläutert. Es zeigt:
- Figur 1: eine schematische Darstellung einer Vorrichtung gemäß dem Stand der Technik;
- Figur 2: eine schematische Darstellung einer Vorrichtung gemäß einer bevorzugten Ausführungsform der Erfindung; und
- Figur 3: eine schematische Darstellung einer weiteren bevorzugten Ausführungsform einer erfindungsgemäßen Vorrichtung.

Die Beschreibung der Figur 1 ist bereits im Zusammenhang mit der Diskussion des Standes der Technik weiter oben erfolgt.

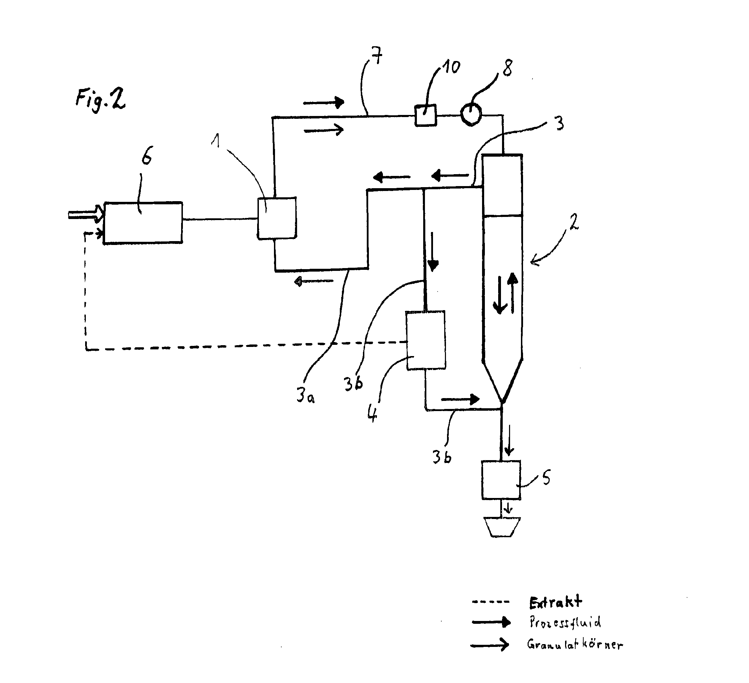

Die Figur 2 zeigt schematisch eine beispielhafte Vorrichtung zur Herstellung von Granulatkömem von Polyamid 6 oder von Copolyamiden, insbesondere geeignet zur Durchführung des erfindungsgemäßen Verfahrens, gemäß einer ersten bevorzugten Ausführungsform der Erfindung.

In einem Polymerisationsreaktor 6 wird eine polymerisierte Schmelze von Polyamid 6 oder Copolyamiden auf Basis von Caprolactam beziehungsweise geeigneten zyklischen Dimeren/Oligomeren erzeugt. Die Herstellung einer solchen Schmelze ist im Übrigen bekannt und wird daher hier nicht weiter beschrieben. Für die erfindungsgemäße Vorrichtung ist ein Unterwassergranulator 1 vorgesehen, durch welchen die polymerisierte Schmelze aus dem Polymerisationsreaktor 6 als Granulatkörner in ein Prozessfluid granuliert wird. Über eine Fluidwegführverbindung 7 wird das Prozessfluid mit den darin enthaltenen Granulatkömem von dem Unterwassergranulator 1 weggeführt und einer Extraktionsvorrichtung 2 zugeführt. Dies ist durch die entsprechenden Pfeile in Fig. 2 gezeigt. Gemäß der in Fig. 2 gezeigten Ausführungsform ist zwischen dem Unterwassergranulator 1 und der Extraktionsvorrichtung 2 eine Druckabbauvorrichtung 8 in der Fluidwegführverbindung 7 angeordnet. Damit kann der erhöhte Druck im Bereich des Unterwassergranulators 1 gegenüber dem geringeren Druck im Bereich der Extraktionsvorrichtung 2 abbaubar sein.

In der Fluidwegführverbindung 7 ist eine Schleuse 10 zum Ausschleusen von Granulatkömem vorgesehen. Diese kann bei einem Anfahrvorgang der Vorrichtung für die einfache Entnahme von Granulatkömem/Agglomeraten aus Anfahrmaterial zum Einsatz kommen.

Das Gemisch aus Prozessfluid und darin enthaltenen Granulatkömem tritt in die Extraktionsvorrichtung 2 ein, wobei sich die Granulatkörner nach unten bewegen (siehe den Bereich unterhalb des Querstrichs in der Extraktionsvorrichtung 2 in Fig. 2). Das Prozessfluid wird über die gemeinsame Fluidverbindung 3 und die Fluidrückführverbindung 3a wieder dem Unterwassergranulator 1 zugeführt und auch über die Extraktions-Fluidverbindung 3b einer Reinigungsvorrichtung 4 zugeführt und nach der Reinigungsvorrichtung 4 über die Extraktions-Fluidverbindung 3b der Extraktionsvorrichtung 2 zugeführt. Das Durchsatz-Verhältnis beträgt dabei 3:1 zwischen einem Durchsatz von Prozessfluid bei der Unterwassergranulation durch den Unterwassergranulator 1 und dem Weg- und Zuführen der im Prozessfluid enthaltenen Granulatkörner durch die Fluidwegführverbindung 7 sowie durch die Fluidrückführverbindung 3a und einem Durchsatz von Prozessfluid bei der Extraktion durch die Extraktionsvorrichtung. Gemäß der in Fig. 2 gezeigten Ausführungsform strömt dann das Prozessfluid von unten nach oben durch zumindest einen Abschnitt der Extraktionsvorrichtung 2. Die Granulatkörner bewegen sich nach unten. Beides ist durch die entsprechenden Pfeile in Fig. 2 gezeigt.

Die Vorrichtung gemäß Fig. 2 bildet einen ersten Kreislauf zwischen dem Unterwassergranulator 1 und der Extraktionsvorrichtung 2 durch den Unterwassergranulator 1, die Fluidwegführverbindung 7, zumindest einen Abschnitt der Extraktionsvorrichtung 2, die gemeinsame Fluidverbindung 3 und die Fluidrückführverbindung 3a und einen zweiten Kreislauf zwischen der Extraktionsvorrichtung 2 und der Reinigungsvorrichtung 4 durch die gemeinsame Fluidverbindung 3, die Extraktions-Fluidverbindung 3b, die Reinigungsvorrichtung 4 und den zumindest einen Abschnitt der Extraktionsvorrichtung 2, wobei dem ersten Kreislauf und dem zweiten Kreislauf die gemeinsame Fluidverbindung 3 gemeinsam ist, sodass sich der erste Kreislauf und der zweite Kreislauf zumindest dort abschnittsweise überlappen. Die Fluidverbindung für das Prozessfluid zwischen der Extraktionsvorrichtung 2 und dem Unterwassergranulator 1 besteht durch die Fluidrückführverbindung 3a und die Fluidverbindung für das Prozessfluid mit den darin enthaltenen Granulatkömem besteht über die Fluidwegführverbindung 7.

Die Vorrichtung der Figur 2 ist erfindungsgemäß mit einem einheitlichen Prozessfluid gefüllt und wird damit betrieben, das heißt das Prozessfluid im Bereich des Unterwassergranulators 1 ist dasselbe wie das Prozessfluid im Bereich der Extraktionsvorrichtung 2.

Ein Ausschleusen der Granulatkörner nach der Extraktionsvorrichtung 2 kann beispielsweise über eine Zellenradschleuse erfolgen (in Fig. 2 nicht gezeigt). Danach ist ein Trockner 5 zum Trocknen der Granulatkörner vorgesehen, welche dann geeignet gelagert und weiterverarbeitet werden können.

Das in der Reinigungsvorrichtung 4 gewonnene Extrakt von niedermolekularen Bestandteilen, welche(s) sich in dem Prozessfluid befunden hat, wird durch die Reinigungsvorrichtung 4 wiedergewonnen und kann zur Polymerisation wieder dem Polymerisationsreaktor 6 zugeführt werden. Dies ist durch die gestrichelte Linie in Fig. 2 angedeutet. Ferner ist im Bereich des Polymerisationsreaktors 6 gemäß Fig. 2 zu sehen, dass die Ausgangproduktstoffe für die Polymerisation im Übrigen von außen dem Polymerisationsreaktor 6 zugeführt werden (durch einen entsprechenden Pfeil im Bereich des Polymerisationsreaktors 6 in Fig. 2 angedeutet).

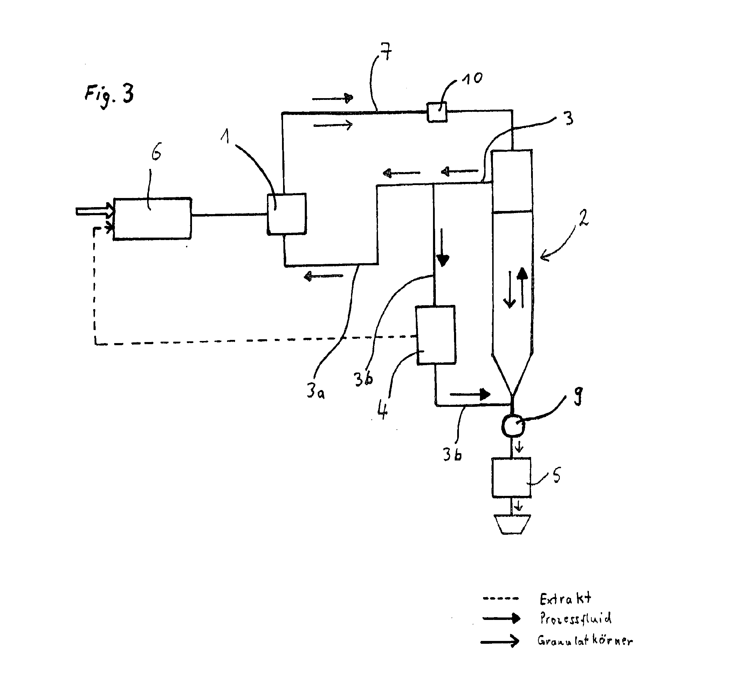

Generell sei angemerkt, dass bei der in Fig.2 (wie auch in der folgenden Fig. 3) gezeigten Vorrichtung an geeigneten Stellen, insbesondere an Verzweigungen, geeignete Ventile, Druck- und Temperatursensoren, Förderpumpen, Filter und Wärmetauscher und ähnliches vorgesehen sind. Diese sind aus Gründen der Klarheit der Darstellung jedoch nicht dargestellt.

Die Figur 3 zeigt schematisch eine beispielhafte zweite bevorzugte Ausführungsform der Vorrichtung der vorliegenden Erfindung.

Die in Fig. 3 gezeigte Ausführungsform unterscheidet sich von der in Fig.2 gezeigten Ausführungsform lediglich dadurch, dass dort die Granulierung und die Extraktion unter dem gleichen beziehungsweise im Wesentlichen dem gleichen erhöhten Druck stattfinden und ein Druckabbau erst vor dem Trockner 5 durch Vorsehen einer Druckabbauvorrichtung 9 zwischen der Extraktionsvorrichtung 2 und dem Trockner 5 erfolgt. Ansonsten entspricht die Ausführungsform gemäß Fig. 3 der Ausführungsform, wie sie gemäß Fig. 2 beschrieben wurde.

Mit der erfindungsgemäßen Vorrichtung, wie oben beschrieben, kann insbesondere auch das erfindungsgemäße Verfahren durchgeführt werden. Somit ergibt sich erfindungsgemäß eine einfache und kostengünstige Möglichkeit, zuverlässig ein besonders gut weiterzuverarbeitendes Granulat von Polyamid 6 oder von Copolyamiden herzustellen.

## Patentansprüche

1. Verfahren zur Herstellung von Granulatkörnern von Polyamid 6 oder von Copolyamiden, durch
- Erzeugen einer Schmelze von Polyamid 6 oder Copolyamiden mittels Polymerisation,
- Erzeugen von Granulatkörnern aus der Schmelze mittels Unterwassergranulation in ein Prozessfluid,
- Wegführen der Granulatkörner vom Ort der Unterwassergranulation in dem Prozessfluid, und
- Zuführen der Granulatkörner in dem Prozessfluid zu einer Extraktion,
- Extraktion von niedermolekularen Bestandteilen als Extrakt,
- Trocknen der Granulatkörner nach der Extraktion,
**dadurch gekennzeichnet, dass**
die Unterwassergranulation und die Extraktion unter Verwendung desselben Prozessfluids erfolgen, wobei das Prozessfluid in einem ersten Kreislauf zwischen Unterwassergranulation und Extraktion geführt wird und in einem zweiten Kreislauf zwischen Extraktion und einer Reinigung des Prozessfluids von Extrakt geführt wird, wobei zwischen dem ersten Kreislauf und dem zweiten Kreislauf eine Fluidverbindung für das Prozessfluid besteht, so dass sich der erste Kreislauf und der zweite Kreislauf zumindest dort abschnittsweise überlappen.

2. Verfahren nach Anspruch 1, **dadurch gekennzeichnet, dass** das Prozessfluid eine Zusammensetzung aufweist, welche einer Zusammensetzung nach der Extraktion entspricht, wobei das Prozessfluid bevorzugt mehr als 10 Gew. % Extrakt aufweist.

3. Verfahren nach Anspruch 1 oder Anspruch 2, **dadurch gekennzeichnet, dass** in dem ersten Kreislauf, bevorzugt in einer Fluidrückführverbindung, eine vom zweiten Kreislauf, bevorzugt in einer Extraktions-Fluidverbindung, unabhängige Temperatur des Prozessfluids eingestellt wird.

4. Verfahren nach einem der Ansprüche 1 bis 3 **dadurch gekennzeichnet, dass** das Prozessfluid bei der Unterwassergranulation und dem Weg- und Zuführen der Granulatkörner unter einem erhöhten Druck über Umgebungsdruck steht, wobei der Druck bevorzugt gleich oder größer 1 bar ist, bevorzugter gleich oder größer 3 bar ist, noch bevorzugter gleich oder größer 4 bar ist.

5. Verfahren nach Anspruch 4, **dadurch gekennzeichnet, dass** die Extraktion bei gegenüber dem erhöhten Druck niedrigerem Druck, bevorzugt bei Umgebungsdruck, erfolgt und vor der Extraktion ein Abbau des Drucks des Prozessfluids von dem erhöhten Druck auf den niedrigeren Druck, bevorzugt den Umgebungsdruck, erfolgt.

6. Verfahren nach Anspruch 4, **dadurch gekennzeichnet, dass** die Extraktion bei dem erhöhten Druck erfolgt und nach der Extraktion und vor dem Trocknen ein Abbau des Drucks von dem erhöhten Druck auf niedrigeren Druck, bevorzugt Umgebungsdruck, erfolgt.

7. Verfahren nach einem der Ansprüche 1 bis 6, **dadurch gekennzeichnet, dass** ein Durchsatz von Prozessfluid bei der Unterwassergranulation und dem Weg- bzw. Zuführen der Granulatkörner in dem Prozessfluid und ein Durchsatz von Prozessfluid bei der Extraktion auf ein Durchsatz-Verhältnis von mindestens 3:1 engestellt wird.

8. Vorrichtung zur Herstellung von Granulatkörnem von Polyamid 6 oder von Copolyamiden, mit einem Unterwassergranulator (1), welcher aus einer in einem Polymerisationsreaktor (6) polymerisierten Schmelze von Polyamid 6 oder Copolyamiden Granulatkörner in ein Prozessfluid granuliert, wobei zwischen dem Unterwassergranulator (1) und einer Extraktionsvorrichtung (2) eine Fluidwegführverbindung (7) besteht, worüber das Prozessfluid mit den darin enthaltenen Granulatkörnern vom Unterwassergranulator (1) weggeführt ist und der Extraktionsvorrichtung (2) zugeführt ist, und einem nach der Extraktionsvorrichtung (2) angeordneten Trockner (5) zum Trocknen der Granulatkörner,
**dadurch gekennzeichnet, dass**
der Unterwassergranulator (1) und die Extraktionsvorrichtung (2) mit demselben Prozessfluid betrieben sind und zwischen der Extraktionsvorrichtung (2) und dem Unterwassergranulator (1) eine Fluidrückführverbindung (3a) für das Prozessfluid besteht.

9. Vorrichtung nach Anspruch 8, **dadurch gekennzeichnet, dass** eine Reinigungsvorrichtung (4) für das Prozessfluid vorgesehen ist, bevorzugt im Bereich einer Extraktions-Fluidverbindung (3b)
der Extraktionsvorrichtung (2).

10. Vorrichtung nach Anspruch 8 oder 9, **dadurch gekennzeichnet, dass** das Prozessfluid in einem ersten Kreislauf zwischen dem Unterwassergranulator (1) und der Extraktionsvorrichtung (2) durch den Unterwassergranulator (1), die Fluidwegführverbindung (7), zumindest einen Abschnitt der Extraktionsvorrichtung (2), eine gemeinsame Fluidverbindung (3) und die Fluidrückführverbindung (3a) geführt ist und in einem zweiten Kreislauf zwischen der Extraktionsvorrichtung (2) und einer Reinigungsvorrichtung (4) durch die gemeinsame Fluidverbindung (3), die Extraktions-Fluidverbindung (3b), die Reinigungsvorrichtung (4) und zumindest einen Abschnitt der Extraktionsvorrichtung (2) geführt ist, wobei zwischen dem ersten Kreislauf und dem zweiten Kreislauf die gemeinsame Fluidverbindung (3) besteht, so dass sich der erste Kreislauf und der zweite Kreislauf zumindest dort abschnittsweise überlappen.

11. Vorrichtung nach einem der Ansprüche 8 bis 10, **dadurch gekennzeichnet, dass** das Prozessfluid zumindest im Bereich des Unterwassergranulators (1) unter gegenüber Umgebungsdruck erhöhtem Druck steht und zumindest in der Extraktionsvorrichtung (2) unter gegenüber dem erhöhten Druck niedrigerem Druck, bevorzugt Umgebungsdruck, steht und zwischen dem Unterwassergranulator (1) und der Extraktionsvorrichtung (2) zumindest eine Druckabbauvorrichtung (8), bevorzugt in der Fluidwegführverbindung (7), angeordnet ist.

12. Vorrichtung nach einem der Ansprüche 8 bis 11, **dadurch gekennzeichnet, dass** das Prozessfluid im Bereich des Unterwassergranulators (1) und in der Extraktionsvorrichtung (2) unter gegenüber Umgebungsdruck erhöhtem Druck steht und zwischen der Extraktionsvorrichtung (2) und dem danach angeordneten Trockner (5) eine Druckabbauvorrichtung (9) angeordnet ist.

13. Vorrichtung nach einem der Ansprüche 8 bis 12, **dadurch gekennzeichnet, dass** in der Fluidwegführverbindung (7) eine Schleuse (10) zum Ausschleusen von Granulatkörnern/Agglomeraten vorgesehen ist.

## Claims

1. A method for the production of pellets of polyamide 6 or copolyamides, by
- production of a melt of polyamide 6 or copolyamides by means of polymerization,
- production of pellets from the melt by means of underwater pelletization into a process fluid,
- removal of the pellets from the site of underwater pelletization in the process fluid, and
- supply of the pellets in the process fluid to an extraction stage,
- extraction of low-molecular components as extract,
- drying of the pellets after extraction,
**characterized in that**
the underwater pelletization stage and the extraction stage take place using the same process fluid and the process fluid is carried in a first circuit between the underwater pelletization stage and the extraction stage and is carried in a second circuit between the extraction stage and a treatment stage for removal of extract from the process fluid, and there is a fluid connection for
the process fluid between the first circuit and the second circuit, with the result that the first circuit and the second circuit partially overlap at least there.

2. The method according to claim 1, **characterized in that** the process fluid has a composition equivalent to a composition after the extraction stage, wherein the process fluid contains preferably more than 10% by weight of extract.

3. The method according to claim 1 or 2, **characterized in that**, in the first circuit, preferably in a fluid return connection, the process fluid is set to a temperature independent of the second circuit, preferably in an extraction fluid connection.

4. The method according to one of claims 1 to 3, **characterized in that** during the underwater pelletization stage and during removal and supply of the pellets, the process fluid is at an increased pressure with respect to ambient pressure, the pressure being preferably greater than or equal to 1 bar, more preferably greater than or equal to 3 bar, still more preferably greater than or equal to 4 bar.

5. The method according to claim 4, **characterized in that** the extraction stage takes place at a pressure lower than the increased pressure, preferably at ambient pressure, wherein, prior to extraction, the pressure of the process fluid is reduced from the increased pressure to the lower pressure, preferably to ambient pressure.

6. The method according to claim 4, **characterized in that** the extraction stage takes place at the increased pressure, wherein after extraction and prior to drying, the pressure is reduced from the increased pressure to a lower pressure, preferably ambient pressure.

7. The method according to one of claims 1 to 6, **characterized in that** a delivery rate of process fluid during the underwater pelletization stage and during removal and supply of the pellets in the process fluid and a delivery rate of process fluid during the extraction stage is adjusted to a delivery rate ratio of at least 3:1.

8. A device for the production of pellets of polyamide 6 or copolyamides, with an underwater pelletizer (1), wherein, from a melt of polyamide 6 or copolyamides polymerized in a polymerization reactor (6), said underwater pelletizer (1) pelletizes pellets into a process fluid, wherein there is a fluid removal connection (7) between the underwater pelletizer (1) and an extraction device (2), wherein the process fluid with the pellets contained therein is removed from the underwater pelletizer (1) through said fluid removal connection (7) and is supplied to the extraction device (2); and with a dryer (5), positioned downstream of the extraction device (2), for drying the pellets,
**characterized in that**
the underwater pelletizer (1) and the extraction device (2) are operated with the same process fluid and there is a fluid return connection (3a) for the process fluid between the extraction device (2) and the underwater pelletizer (1).

9. The device according to claim 8, **characterized in that** a treatment device (4) is provided for the process fluid, preferably in the region of an extraction fluid connection (3b) of the extraction device (2).

10. The device according to claim 8 or 9, **characterized in that** the process fluid is carried in a first circuit between the underwater pelletizer (1) and the extraction device (2) through the underwater pelletizer (1), the fluid removal connection (7), at least one part of the extraction device (2), a common fluid connection (3), and the fluid return connection (3a) and is carried in a second circuit between the extraction device (2) and a treatment device (4) through the common fluid connection (3), the extraction fluid connection (3b), the treatment device (4), and at least one part of the extraction device (2), wherein there is the common fluid connection (3) between the first circuit and the second circuit, with the result that the first circuit and the second circuit partially overlap at least there.

11. The device according to one of claims 8 to 10, **characterized in that**, at least in the region of the underwater pelletizer (1), the process fluid is at an increased pressure with respect to ambient pressure and, at least in the extraction device (2), is at a lower pressure than the increased pressure, preferably at ambient pressure, and there is at least one pressure reduction device (8), preferably in the fluid removal connection (7), between the underwater pelletizer (1) and the extraction device (2).

12. The device according to one of claims 8 to 11, **characterized in that**, in the region of the underwater pelletizer (1) and in the extraction device (2), the process fluid is at an increased pressure with respect to ambient pressure and there is a pressure reduction device (9) between the extraction device (2) and the dryer (5), said dryer (5) being positioned downstream of said extraction device (2).

13. The device according to one of claims 8 to 12, **characterized in that** the fluid removal connection (7) is provided with an air lock (10) for the removal of pellets/agglomerates.

## Revendications

1. Procédé pour la fabrication de granulés de polyamide 6 ou de copolyamides par
- production de masse fondue de Polyamide 6 ou copolyamides par polymérisation
- production de granulés à partir de la masse fondue par granulation immergée dans un fluide de process
- évacuation des granulés du lieu de la granulation immergée dans le fluide de process et
- acheminement des granulés dans le fluide de process jusqu'à une extraction
- extraction des particules de faible poids moléculaire comme extrait
- séchage des granulés après extraction
**caractérisé en ce que**
la granulation immergée et l'extraction sont effectuées en utilisant le même fluide de process, le fluide de process étant amené dans un premier circuit entre la granulation immergée et l'extraction et dans un deuxième circuit entre l'extraction et un nettoyage du fluide de process pour séparer l'extrait, une liaison fluide existant pour le fluide de process entre le premier circuit et le deuxième circuit, de sorte que le premier circuit et le deuxième circuit s'y chevauchent au moins sur une section.

2. Procédé selon la revendication 1 **caractérisé en ce que** le fluide de process présente une composition correspondant à une composition après l'extraction, le fluide de process présentant de préférence plus de 10% en poids d'extrait.

3. Procédé selon la revendication 1 ou la revendication 2, **caractérisé en ce que**, dans le premier circuit de préférence dans une liaison retour du fluide une température du fluide de process est réglée indépendamment du deuxième circuit, de préférence dans une liaison fluide d'extraction.

4. Procédé selon la revendication 1 à 3, **caractérisé en ce que** le fluide de process lors de la granulation immergée et de l'évacuation et de l'acheminement des granulés est sous une pression plus élevée que la pression ambiante, la pression étant de préférence égale ou supérieure à 1 bar, de manière plus préférée égale ou supérieure à 3 bars et de manière encore plus préférée égale ou supérieure à 4 bars.

5. Procédé selon la revendication 4, **caractérisé en ce que** l'extraction est effectuée à basse pression plutôt qu'à pression élevée, de préférence à pression ambiante et **en ce que** avant l'extraction se produit une baisse de pression du fluide de process de la pression élevée à la pression plus basse, de préférence la pression ambiante.

6. Procédé selon la revendication 4, **caractérisé en ce que** l'extraction est effectuée à une pression élevée et qu'après l'extraction et avant le séchage se produit une baisse de pression, de la pression élevée à une pression plus basse, de préférence la pression ambiante.

7. Procédé selon les revendications 1 à 6, **caractérisé en ce qu'**un débit de fluide de process lors de la granulation immergée et l'évacuation et/ou l'acheminement des granulés dans le fluide de process et un débit du fluide de process lors de l'extraction sont réglés à un rapport de débit de 3 :1.

8. Dispositif pour la fabrication de granulés de polyamide ou de copolyamides avec un granulateur immergé (1) qui granule des granulés dans un fluide de process à partir d'une masse fondue polymérisée de polyamide 6 et copolyamides se trouvant dans un réacteur de polymérisation (6), une liaison d'évacuation du fluide (7) existant entre le granulateur immergé (1) et un dispositif d'extraction (2), le fluide de process contenant les granulés étant évacué et acheminé vers le dispositif d'extraction (2) et vers un séchoir (5) en aval du dispositif d'extraction (2) pour sécher les granulés
**caractérisé en ce que**
le granulateur immergé (1) et le dispositif d'extraction (2) sont alimentés par le même fluide de process et qu'il existe une liaison retour du fluide (3a) pour le fluide de process entre le dispositif d'extraction (2) et le granulateur immergé (1).

9. Dispositif selon la revendication 8 **caractérisé en ce qu'**un dispositif de nettoyage (4) pour le fluide de process est prévu de préférence dans la zone de liaison fluide d'extraction (3b) du dispositif d'extraction (2).

10. Dispositif selon la revendication 8 ou 9, **caractérisé en ce que** le fluide de process dans un premier circuit entre le ganulateur immergé (1) et le dispositif d'extraction (2), est conduit à travers le granulateur immergé (1), la liaison d'évacuation du fluide (7), au moins une section du dispositif d'extraction (2), une liaison fluide commune (3) et la liaison retour du fluide (3a) et dans un deuxième circuit entre le dispositif d'extraction (2) et un dispositif de nettoyage (4), il est conduit à travers la liaison fluide commune (3), la liaison fluide d'extraction (3b), le dispositif de nettoyage (4) et au moins une section du dispositif d'extraction (2), une liaison fluide commune (3) existant entre le premier et le deuxième circuit de sorte que le premier circuit et le deuxième circuit s'y chevauchent au moins sur une section.

11. Dispositif selon une des revendications 8 à 10, **caractérisé en ce que** le fluide de process au moins dans la zone du granulateur immergé (1) est sous une pression plus élevée que la pression ambiante et au moins dans le dispositif d'extraction (2) est sous une pression plus basse que la pression élevée, de préférence sous la pression ambiante et qu'un dispositif de réduction de pression (8) est installé entre le granulateur immergé (1) et le dispositif d'extraction (2), de préférence dans la liaison d'évacuation du fluide (7).

12. Dispositif selon une des revendications 8 à 11, **caractérisé en ce que** le fluide de process est sous une pression plus élevée que la pression ambiante dans la zone du granulateur immergé (1) et du dispositif d'extraction (2) et qu'un dispositif de réduction de pression (9) est installé entre le dispositif d'extraction (2) et le séchoir (5) en aval.

13. Dispositif selon une des revendications 8 à 12, **caractérisé en ce qu'**un sas (10) est prévu dans la liaison d'évacuation du fluide (7) pour expulser les granulés/agglomérats.
